Europäisches Patentamt

European Patent Office

Office européen des brevets

(19)

(11) Numéro de publication : **0 128 075**
**B1**

# (12) FASCICULE DE BREVET EUROPÉEN

(45) Date de publication du fascicule du brevet :
**10.09.86**

(21) Numéro de dépôt : **84401018.1**

(22) Date de dépôt : **17.05.84**

(51) Int. Cl.⁴ : **E 05 F 15/16**

(54) Circuit de commande pour panneau ouvrant de véhicule automobile, notamment pour lève-vitre.

(30) Priorité : **27.05.83 FR 8308856**

(43) Date de publication de la demande :
**12.12.84 Bulletin 84/50**

(45) Mention de la délivrance du brevet :
**10.09.86 Bulletin 86/37**

(84) Etats contractants désignés :
**DE GB IT SE**

(56) Documents cités :
**FR-A- 2 415 711**
**FR-A- 2 465 061**
**US-A- 4 001 661**
**US-A- 4 119 899**

(73) Titulaire : **ACIERS ET OUTILLAGE PEUGEOT Société
dite:**

**F-25400 Audincourt (Doubs) (FR)**

(72) Inventeur : **Petrequin, Claude
2 Rue Berlioz
F-25700 Valentigney (FR)**

(74) Mandataire : **Bressand, Georges et al
c/o CABINET LAVOIX 2 Place d'Estienne d'Orves
F-75441 Paris Cedex 09 (FR)**

EP 0 128 075 B1

## Description

La présente invention est relative à un circuit de commande du moteur d'entraînement d'un panneau ouvrant pour véhicule automobile, tel qu'une vitre ou un toit ouvrant, du type comprenant des moyens de commutation à action manuelle permettant, par l'intermédiaire d'un montage électronique, de commander l'alimentation du moteur dans les deux sens pour la fermeture ou l'ouverture du panneau soit selon un cycle entièrement automatique couvrant la course totale du panneau, soit selon un cycle manuel permettant de placer le panneau sélectivement dans une position quelconque intermédiaire de sa course, lesdits moyens de commutation comprenant pour chaque sens de marche du moteur un premier organe de commande pour le déclenchement du cycle automatique et un second organe de commande indépendant du premier pour le positionnement sélectif du panneau.

Un tel circuit de commande a été décrit dans le FR-A-2 415 711. Ce circuit comporte un montage transistorisé de puissance pour assurer la commande du moteur en fonction de signaux logiques dont les niveaux sont déterminés par les positions des premier et second organes de commande.

L'inconvénient de ce montage réside dans l'impossibilité pour l'utilisateur de manœuvrer le panneau ouvrant lorsqu'une panne survient dans le montage électronique car le moteur est exclusivement alimenté à travers l'étage de puissance transistorisé piloté pour des signaux logiques, eux aussi engendrés à l'aide de composants électroniques.

On remédie à cet inconvénient grâce à l'invention qui vise à fournir un circuit de commande qui permette, même en cas d'une panne de ses composants électroniques, d'agir sur le panneau pour son ouverture ou sa fermeture.

L'invention a donc pour objet un tel circuit qui est caractérisé en ce que, pour chaque sens de marche du moteur, il est prévu un contact inverseur d'un relais électromagnétique monté de manière à conduire le courant du moteur dans sa position de repos en série avec ledit second organe de commande respectif et de manière également à assurer le fonctionnement automatique du moteur en position de travail, le relais étant alors excité par ledit premier organe de commande respectif.

Un circuit conçu selon ces caractéristiques peut fonctionner pour manœuvrer le panneau pratiquement en toutes circonstances, c'est-à-dire tant que la source d'alimentation (batterie du véhicule) et en état de marche, car les contacts inverseurs des relais qui sont par ailleurs des organes robustes et peu sujets à des pannes, sont dans leur position de repos pour établir les circuits des organes de commande de positionnement sélectifs qui sont directement branchés en série avec le moteur sur la source d'alimentation, sans interposition d'aucun composant électronique.

D'après le brevet américain 4 119 899, il est par ailleurs connu d'utiliser des relais pour permettre, à l'aide d'organes de commande distincts, le déclenchement des courses totales de montée et de descente d'un panneau ouvrant. Cependant, dans ce dispositif antérieur, aucun montage électronique (apportant par ailleurs des avantages notables) n'est utilisé. Par ailleurs, les relais ne comportent pas de contacts inverseurs.

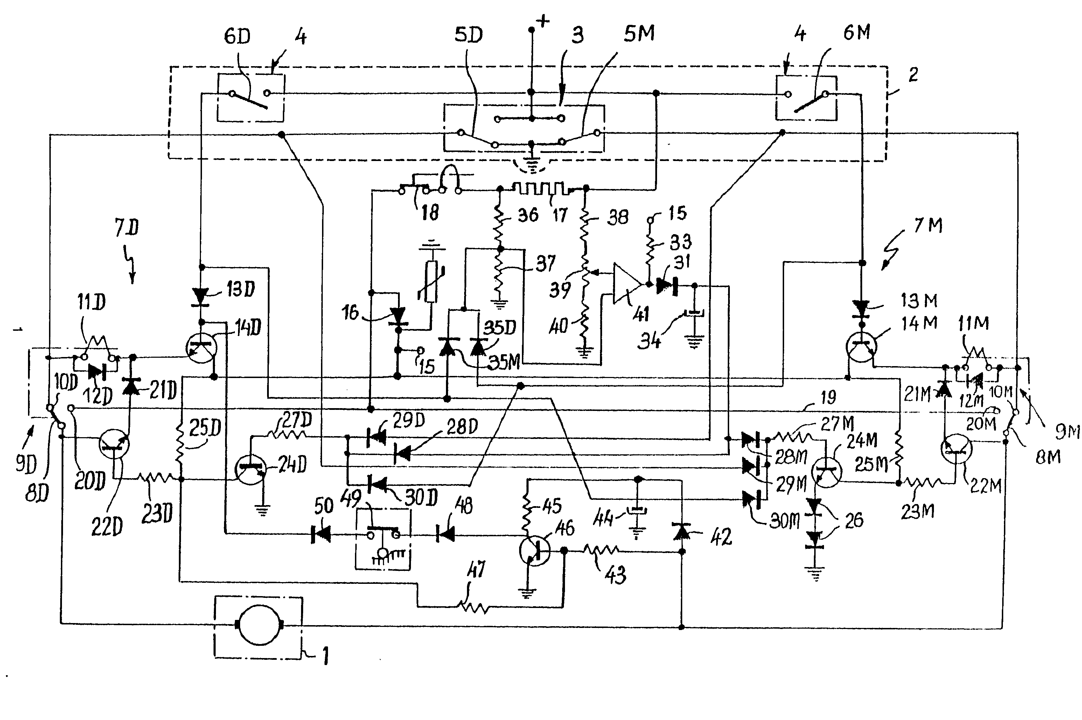

L'invention sera mieux comprise à l'aide de la description qui va suivre, d'un exemple de réalisation donnée uniquement à titre d'exemple et faite en se référant au dessin annexé, sur lequel : la Fig. unique montre un circuit de commande suivant l'invention.

En se référant maintenant à cette figure, on va représenter un moteur électrique 1 qui par un mécanisme non représenté et connu est capable d'entraîner un panneau de véhicule automobile, tel que par exemple une vitre ou le toit ouvrant. Ce moteur qui est à courant continu peut être commandé dans les deux sens. Dans l'exemple décrit ici, on suppose qu'il s'agit d'une vitre et que le circuit de commande appartient donc à un lève-vitre pouvant provoquer la descente et la montée de cette vitre.

Le circuit comprend des moyens de commutation 2 comportant un sélecteur 3 d'un mode manuel et un sélecteur 4 de mode automatique. Le sélecteur 3 est pourvu de deux inverseurs 5D et 5M tandis que le sélecteur 4 comporte deux interrupteurs 6D et 6M. Ces organes de commutation sont reliés respectivement à une section de descente 7D et à une section de montée 7M du circuit de commande.

On va maintenant décrire la section 7M étant entendu que la section de descente 7D comporte d'une façon générale, les mêmes composants agencés de la même façon et désignés par les mêmes références numériques affectées de la lettre D au lieu de la lettre M. Cependant, dans la suite de la description, les références numériques dépourvues de suffixes M ou D sont supposées être des organes communs aux sections 7M et 7D ou des composants indépendants.

On voit tout d'abord que le moteur 1 est relié au contact mobile de l'inverseur 5M qui comporte deux contacts fixes respectivement reliés à la source de tension (borne positive) et à la masse. Cette connexion est réalisée par l'intermédiaire du contact mobile 8M d'un inverseur 9M dont l'un des contacts fixes 10M est relié au contact mobile correspondant du sélecteur 3. Le contact inverseur 8M est commandé par une bobine de relais 11M shuntée par une diode 12M de suppression de transitoires, étant entendu que lorsque la bobine 11M n'est pas excitée, le contact 8M se trouve dans la position représentée sur la figure. En d'autres termes, lorsque l'utilisateur actionne le sélecteur 3 pour faire basculer le contact 5M, le moteur est directement alimenté et cesse de l'être dès que le contact inverseur 5M est relaché. Ceci correspond à la commande classique d'un lève-vitre entièrement manuel.

Le contact interrupteur 6M est relié par une diode 13M à la base d'un transistor 14M dont l'émetteur est relié à la bobine 11M et dont le collecteur est connecté à une borne de tension positive 15 constituée par la cathode d'une diode 16 dont l'anode est reliée dans un circuit qui va maintenant être décrit.

Ce circuit comprend en série, une résistance 17 de faible valeur et servant de détecteur de courant, un contact thermique de sécurité 18, un conducteur 19 et le contact fixe 20M du contact inverseur 8M étant entendu que la ligne 20 est reliée au contact correspond 20D de l'inverseur 8D. En d'autres termes, lorsque l'un ou l'autre des contacts 8M ou 8D sont inversés, le moteur 1 est alimenté à travers le circuit qui vient d'être décrit.

La jonction entre l'émetteur du transistor 14M et la bobine 11M est branchée sur une diode 21M, elle-même connectée à l'émetteur d'un transistor 22M dont le collecteur est relié au contact mobile 8M de l'inverseur 9M. La base de ce transistor est reliée à une résistance 23M, connectée à son tour d'une part au collecteur d'un transistor 24M et à une résistance 25M, cette dernière étant connectée comme le collecteur du transistor 14M à la borne 15.

L'émetteur du transistor 24M est connecté à la masse à travers deux diodes 26. La base de ce transistor est reliée à une résistance 27M dont l'extrémité opposée constitue une jonction à laquelle sont reliées trois diodes 28M, 29M et 30M.

La diode 28M est connectée d'une part à la diode 28D de la section 7D et d'autre part à la cathode d'une diode 31 dont l'anode est reliée à la sortie d'un amplificateur 32 et à une résistance 33 dont l'extrémité opposée reçoit la tension positive régnant sur la borne 15. Un condensateur 34 est monté entre la cathode de la diode 31 et la masse.

La seconde diode 29M est connectée à la jonction entre le contact mobile 5D et le contact mobile 8D.

La troisième diode 30M est connectée en opposition à une autre diode 35M, dont la borne opposée est connectée avec la diode 35D au point intermédiaire d'un diviseur de tension constitué de deux résistances 36 et 37, la première étant reliée à la jonction entre la résistance 17 et le contact de sécurité thermique 18 et la seconde étant connectée à la masse.

La diode 35M est également connectée par son anode à la jonction entre le contact interrupteur 6D et la diode 13D, la diode 35D étant connectée au point de jonction entre le contact interrupteur 6M et la diode 13M.

Un autre diviseur de tension composé d'une résistance 38 d'un potentiomètre 39 et d'une autre résistance 40 est reliée entre la source de tension positive et la masse, le curseur du potentiomètre 39 étant connecté à l'une des entrées d'un amplificateur 41, l'autre entrée de cet amplificateur étant connectée à la jonction entre les résistances 36 et 37.

La jonction entre le moteur 1 et le contact mobile 8M est reliée d'une part à une diode 42 et d'autre part à une résistance 43. La cathode de la diode 42 est connectée à un condensateur 44 branché par ailleurs à la masse et à une résistance 45 qui est la résistance de collecteur pour un transistor 46 dont l'émetteur est monté à la masse et dont la base est reliée à la résistance 43 et à une autre résistance 47 elle-même reliée à la jonction entre la résistance 23D et le collecteur du transistor 24D. Le collecteur du transistor 46 est branché par l'intermédiaire d'une diode 48 à un contact interrupteur 49 qui est associé au panneau ouvrant et qui s'ouvre lorsque celui-ci se trouve à quelques millimètres de sa position de fermeture complète. Ce contact interrupteur peut être monté par exemple dans les glissières de la vitre ou dans les rails du toit ouvrant selon le cas. Il est relié par l'intermédiaire d'une diode 50 à la jonction entre la diode 13D et le transistor 14D.

Le circuit suivant l'invention étant ainsi entièrement décrit, on va maintenant en examiner le fonctionnement.

Comme déjà indiqué ci-dessus, le circuit suivant l'invention comporte un sélecteur 3 destiné au mode manuel de fonctionnement et un sélecteur 4 qui permet d'opérer en mode automatique. Sur le plan pratique, ceci revient à dire que les contacts mobiles 5M et 5D sont commandés chacun par un bouton qui est séparé du bouton associé à la commande automatique du sens d'entraînement du moteur 1 correspondant.

On a déjà vu que, lorsque l'opérateur actionne les contacts 5M ou 5D, le moteur 1 est alimenté directement par la source d'alimentation en passant par les contacts mobiles 8M ou 8D maintenus dans leur position de repos.

En commande manuelle, on peut donc facilement placer le panneau ouvrant dans toute position voulue et notamment créer un filet d'air, la course du panneau étant déterminée par le temps d'enfoncement du bouton en question.

En admettant qu'il s'agisse de la montée, on remarquera que le transistor 14M qui commande la bobine 11M n'est pas conducteur puisque sa base n'est pas alimentée. Son collecteur étant relié à la tension de la borne 15, son émetteur se trouve également au potentiel positif par l'intermédiaire de la bobine 11M, grâce au fait que le contact 5M est inversé sur la borne positive de la source d'alimentation. La bobine 11D n'est également pas alimentée car le transistor 14D n'est pas conducteur, sa base ne recevant aucune tension de polarisation.

On voit donc que, lors de la commande en mode manuelle, le circuit destiné à commander le mode automatique ne peut fonctionner.

On suppose maintenant que l'opérateur souhaite procéder à la montée automatique de la vitre. Pour ce faire, il actionne le contact interrupteur 6M par une action dont la durée peut être quelconque, le circuit reprenant la commande immédiatement indépendamment de l'état de cet interrupteur.

Lorsque l'interrupteur 6M est fermé, il alimente positivement la base du transistor 14M qui, ayant son collecteur à la borne 15 devient conducteur, son circuit émetteur se refermant sur la masse par la bobine 11M et le contact 5M au repos.

La bobine 11M est donc excitée et le contact mobile 8M change de position. Le contact fixe 20M est relié à la borne positive de la source d'alimentation par l'intermédiaire du contact 18 et de la résistance 17, de sorte que le moteur 1 est alimenté dans le sens de la montée. Simultanément, le transistor 22M passe à l'état conducteur et assure ainsi l'auto-alimentation de la bobine 11M de sorte que le contact 8M reste dans sa position de travail.

Le transistor 22M est rendu conducteur grâce au fait que son collecteur reçoit l'alimentation positive dès que le contact 8M se trouve dans sa position de travail et que sa base est polarisée positivement par l'intermédiaire des résistances 23M et 25M, le transistor 24M étant bloqué. L'émetteur du transistor 22M est relié au pôle négatif par la diode 21M et la bobine 11M qu'il alimente.

Il est à noter que la pointe d'intensité qui apparaît lors de la mise en route du moteur ne peut provoquer une action sur le circuit, car la partie détection de courant de celui-ci est inhibée par la diode 35M qui modifie le seuil de mesure établi par les résistances 36 et 37.

Le moteur 1 est ainsi alimenté par la résistance 17, le contact 18, le contact 8M, le contact 8D et le contact inverseur 5D qui reste au repos puisque le montage fonctionne en mode automatique.

La résistance 17 à une faible valeur afin de ne pas limiter les performances du moteur, mais peut néanmoins mesurer l'intensité qui traverse le circuit d'alimentation de celui-ci. L'amplificateur opérationnel 41 qui est monté en comparateur reçoit d'une part la tension régnant à la jonction des résistances 36 et 37 et d'autre part celle du curseur du potentiomètre 39. Les valeurs de ces résistances sont choisies afin qu'en marche du moteur, la sortie du comparateur se trouve à l'état bas.

Si l'intensité dans le circuit du moteur dépasse une valeur prédéterminée, la chute de tension aux bornes de la résistance 17 est transmise aux entrées du comparateur et peut en provoquer le basculement, de sorte que sa sortie passe au niveau haut.

Dans ces conditions, le comparateur qui est à collecteur ouvert, ne shunte plus la résistance 33 et charge ainsi le condensateur 34 par l'intermédiaire de la diode 31.

La tension positive qui apparaît ainsi aux bornes du condensateur 34 est transmise sur les anodes des diodes 28M et 28D, de sorte que les transistors 24M et 24D sont rendus non conducteurs par l'intermédiaire des résistances 27M et 27D respectivement, ce qui supprime l'auto-alimentation de la bobine 11M (ou 11D si on est en descente).

Il en résulte que le moteur s'arrête en fin de course que ce soit à la montée ou la descente, le contact 49 étant ouvert à la montée lorsque le panneau se trouve près de sa position de fermeture.

En cas d'obstacle rencontré sur le parcours du panneau mobile à la montée, l'ordre d'arrêt est envoyé selon un fonctionnement identique à celui qui vient d'être décrit. Cependant, il faut alors tenir compte du fait que l'interrupteur 49 est ouvert.

Lorsque le transistor 24M est rendu conducteur, il bloque le transistor 22M, de sorte que l'inverseur 8M retourne à sa position de repos. Le moteur est donc arrêté brutalement par court-circuit sur lui-même.

Le transistor 46 est normalement conducteur lorsque le moteur fonctionne en montée grâce aux résistances 43 et 45 qui en polarisent la base positivement. La résistance 45 lui assure l'alimentation positive à travers la diode 42. Il en résulte que le potentiel sur l'anode de la diode 48 est voisin de 0, de sorte que par l'intermédiaire de la diode 50, le transistor 14D est bloqué.

A l'instant où le moteur est arrêté, la résistance 43 transmet le potentiel de la masse, potentiel qui est également appliqué par la résistance 47 grâce au fait que le transistor 24D est rendu conducteur et que son potentiel de collecteur est donc au voisinage de 0.

Le transistor 46 est alors bloqué, ce qui fait apparaître sur l'anode de la diode 48, une impulsion positive fournie par le condensateur 43 qui est préalablement chargé par la diode 42.

Ainsi, le transistor 14D est rendu conducteur, de sorte que la bobine 11D est alimentée et provoque le recul du panneau dans le sens de l'ouverture.

Le transistor 22D ne peut cependant pas encore alimenter la bobine 11D, car le potentiel du collecteur du transistor 24D est encore voisin de 0. Le condensateur 44 se déchargeant progressivement, au bout d'un certain temps, le transistor 14D n'est plus alimenté et cesse donc de conduire. Comme par ailleurs, le transistor 24D est toujours conducteur, l'auto-alimentation de la bobine 11M n'est pas assurée et le moteur s'arrête.

On constate donc que le fonctionnement en mode automatique est totalement indépendant du fonctionnement en mode manuel grâce au fait que ces deux modes de fonctionnement sont commandés par des boutons séparés.

Cependant, toute action sur les boutons de commande devant être prioritaire, il existe dans le circuit un certain nombre de sécurités.

La première de ces sécurités est réalisée grâce aux diodes 29D et 29M qui bloquent respectivement le sens d'action non déclenché par la demande de l'opérateur exprimée par l'enfoncement du bouton de commande concerné.

La seconde sécurité est assurée par les diodes 30M et 30D qui ont la même action, mais que les diodes 29D et 29M en mode automatique.

Si l'opérateur agit simultanément et par inadvertance, sur plusieurs commandes à la fois, le blocage qui vient d'être décrit est actif et le circuit ne peut fonctionner.

## Revendications

1. Circuit de commande du moteur d'entraînement d'un panneau ouvrant pour véhicule automobile, tel qu'une vitre ou un toit ouvrant, du type comprenant des moyens de commutation (2) à action manuelle permettant, par l'intermédiaire d'un montage électronique (7D, 7M), de commander l'alimentation du moteur (1) dans les deux sens pour la fermeture ou l'ouverture du panneau soit selon un cycle entièrement automatique couvrant la course totale du panneau, soit selon un cycle manuel permettant de placer le panneau sélectivement dans une position quelconque intermédiaire de sa course, lesdits moyens de commutation (2) comprenant, pour chaque sens de marche du moteur (1), un premier organe de commande (6M, 6D) pour le déclenchement du cycle automatique et un second organe de commande (5M, 5D) indépendant du premier pour le positionnement sélectif du panneau, caractérisé en ce que, pour chaque sens de marche du moteur, il est prévu un contact inverseur (8M, 8D) d'un relais électromagnétique (9M, 11M ; 9D, 11D) monté de manière à conduire le courant du moteur dans sa position de repos en série avec ledit second organe de commande (5M ou 5D) respectif et de manière également à assurer le fonctionnement automatique du moteur (1) en position de travail, le relais étant alors excité par ledit premier organe de commande respectif (6M, 6D).

2. Circuit suivant la revendication 1, caractérisé en ce que chaque premier organe de commande (6M, 6D) est raccordé à la base d'un premier transistor (14M, 14D) capable d'alimenter ledit relais (9M, 11M, 9D, 11D) lorsque cet organe de commande est actionné, et en ce que ledit relais est associé à un second transistor (22M, 22D) de maintien de l'excitation dudit relais, ledit transistor de maintien pouvant être activé par ledit premier transistor (14M, 14D).

3. Circuit suivant la revendication 2, dans lequel il est prévu des moyens de limitation (17, 41, 24M, 24D) pour empêcher ledit moteur (1) de fonctionner au-delà d'un seuil de courant prédéterminé, caractérisé en ce qu'en vue d'éviter une réaction desdits moyens de limitation au démarrage du moteur (1), il est prévu des moyens d'inhibition (30M, 30D, 35M, 35D) capables de modifier ledit seuil vers le haut, lorsque l'un ou l'autre des premiers organes de commande (6M, 6D) sont actionnés.

## Claims

1. A control circuit for the driving motor of an openable panel for a motor vehicle, such as an openable window glass or roof, of the type comprising manually actuatable switching means (2, 4) controlling, through an electronic circuit (7D, 7M), the supply of power to the motor (1) in both directions for closing or opening the panel, either in accordance with a fully automatic cycle covering the total travel of the panel, or in accordance with a manual cycle for placing the panel selectively in any intermediate position of its travel, said switching means (2) comprising, for each direction of operation of the motor (1), a first control element (6M, 6D) for the initiation of the automatic cycle, and a second control element (5M, 5D) independent of the first for the selective positioning of the panel, characterized in that there is provided, for each direction of operation of the motor, an inverting contact (8M, 8D) of an electromagnetic relay (9M, 11M ; 9D, 11D) arranged in such manner as to conduct the current of the motor in its position of rest in series with said respective second control element (5M or 5D) and also so arranged as to ensure the automatic operation of the motor (1) in the operating position, the relay being then excited by said respective first control element (6M, 6D).

2. A circuit according to claim 1, characterized in that each first control element (6M, 6D) is connected to the base of a first transistor (14M, 14B) capable of supplying power to said relay (9M, 11M, 9D, 11D) when this control element is actuated, and said relay is associated with a second transistor (22M, 22B) for maintaining the excitation of said relay, it being possible to actuate said maintenance transistor by said first transistor (14M, 14D).

3. A circuit according to claim 2, in which there are provided limiting means (17, 41, 24M, 24D) for preventing said motor (1) from operating beyond a predetermined current threshold, characterized in that, for the purpose of avoiding a reaction of said limiting means on the starting up of the motor (1), inhibition means (30M, 30D, 35M, 35D) are provided which are capable of modifying said threshold in the higher direction, when one or the other of the first control elements (6M, 6D) is actuated.

## Patentansprüche

1. Steuerstromkreis für den Antriebsmotor eines zu öffnenden Wandteiles eines Kraftfahrzeugs, z. B. einer Fensterscheibe oder eines Schiebedachs, mit von Hand betätigbaren Umschaltmitteln (2), um über eine elektronische Schaltung (7D, 7M) die Stromspeisung des Motors (1) in beiden Antriebsrichtungen, zum Schließen oder zum Öffnen des Wandteils, entweder in einem voll automatischen, die gesamte Bewegungsbahn des Wandteils bestreichenden Zyklus oder in einem manuellen Zyklus zu steuern, so daß das Wandteil wahlweise in jede Position auf seiner Bewegungsbahn bringbar ist, wobei die Umschaltmittel (2) für jede Antriebsrichtung des Motors (1) ein erstes Steuerelement (6M, 6D) für die Auslösung des automatischen Zyklus und ein zweites Steuerelement (5M, 5D) aufweisen, welches unabhängig von dem ersten für die selektive Positionierung des Wandteils wirksam ist, dadurch gekennzeichnet, daß für jede Antriebsrichtung des Motors ein Umschaltkontakt (8M, 8D) eines elektromagnetischen Relais (9M, 11M; 11D) vorhanden ist, welcher so geschaltet ist, daß er den Speisestrom des in Ruhestellung befindlichen Motors mit dem betreffenden zweiten Steuerelement (5M bzw. 5D) in Reihe schaltet, als auch, daß er den automatischen Betrieb des Motors (1) in der Arbeitsstellung gewährleistet, indem das Relais nun von dem betreffenden ersten Steuerelement (6M, 6D) erregt wird.

2. Stromkreis nach Anspruch 1, dadurch gekennzeichnet, daß jedes erste Steuerelement (6M, 6D) mit der Basis eines ersten Transistors (14M, 14D) verbunden ist, welcher das Relais (9M, 11M, 9D, 11D) bei Betätitung dieses Steuerelementes mit Strom speist, und daß das Relais mit einem zweiten Transistor (22M, 22D) zur Aufrechterhaltung der Erregung des Relais verbunden ist, wobei dieser Transistor hierfür durch den ersten Transistor (14M, 14D) schaltbar ist.

3. Stromkreis nach Anspruch 2 mit Begrenzungseinrichtungen (17, 41, 24M, 24D), die verhindern, daß der Motor (1) über einer vorbestimmten Stromschwelle arbeitet, dadurch gekennzeichnet, daß die Begrenzungseinrichtungen bei Inbetriebsetzung des Motors (1) dadurch unwirksam sind, daß Nein-Einrichtungen (30M, 30D, 35M, 35D) vorgesehen sind, um diese Schwelle bei Betätigung des einen oder des anderen der ersten Steuerelemente (6M, 6D) nach aufwärts zu verschieben.